# EUROPEAN PATENT APPLICATION

(11) **EP 1 222 957 A1**
(43) Date of publication of application: **17.07.2002**
(21) Application number: 00128339.9
(22) Date of filing: 22.12.2000
(51) Int. Cl.: B01F 5/06

(54) **Process and device for producing a food grade oil-in-water emulsion**

(71) Applicant: Société des Produits Nestlé S.A., 1800 Vevey (CH)
(72) Inventor: Schroeder, Volker, 84577 Tuessling (DE); Oberacker, Thomas, 84577 Tuessling (DE)
(74) Representative: Andrae, Steffen, Dr.

(57) **Abstract**

The invention concerns a process for producing a food grade stable oil-in-water emulsion, which method comprises
- producing a preemulsion of the oil , the water , the emulsifier and the other ingredients and
- pumping said preemulsion at a pressure between 5 and 500 bar through a pipe comprising at least one plate, said plate presenting at least one bore to obtain the emulsion.

## Description

The present invention concerns a process for producing a food grade stable oil-in-water emulsion. The invention concerns further the device for carrying out this process.

The DE patent application 19856604 concerns a process and a device for the preparation of an emulsion, wherein the raw emulsion is pressed in a pipe through an aperture of a plate, said aperture being adjusted with a needle. This gives a way of operating more or less quickly the device and of obtaining a very fine emulsion. The drawback of this solution is that the device has to be cleaned more often, because of the presence of the needle in the system . The EP patent application 1'008'380 concerns also a process for preparing an emulsion , wherein the liquids to be mixed are pumped at a pressure of about 100 to 800 bar through a mixing device comprising an inlet nozzle, a turbulence chamber and an outlet nozzle. The problem with this solution is that the pressure used is very high and they use a very small turbulence chamber.

The object of the present invention is to develop a process for preparing an oil-in-water emulsion, with no problem for the cleaning of the used device and wherein said process is carried out without any expensive element for said device.

The present invention concerns a process for producing a food grade stable oil-in-water emulsion, which method comprises
- producing a preemulsion of the oil or melted fat, the water , the emulsifier and the other ingredients and
- pumping said preemulsion at a pressure of at least 5 bar through a pipe comprising at least one plate, said plate presenting at least one opening to obtain the emulsion.

The oil or fat is an edible oil or fat, preferably an animal fat, a vegetable oil taken from the group consisting of corn oil, sunflower oil, soybean oil and cottonseed oil. The emulsifier is taken from the group consisting of protein, unmodified egg yolk, modified egg yolk, lecithin, phospholipid, as well as artificial emulsifier , like polyoxyethylen.

It is possible to prepare according to the invention a low-fat emulsion or a high-fat emulsion. Therefore , the content of oil or fat of the emulsion can vary between 0.1 and 80 %. In the present description, all the percentages are given in weight. Preferably, the emulsion is produced with an oil or fat content of about 55 to 78 %.

The other ingredients of the produced emulsion are taken from the group consisting of sugar, salt, vinegar, mustard, spices, flavorings. According to the process of the invention, there is normally no need to add in the emulsion a stabilizer or a thickener. Nevertheless, such an addition can be possible when the amount of oil or fat is below 55 %.

The emulsion is produced with a final viscosity comprised between 1 and 50 Pa.s. The emulsion is preferably produced to reach a final viscosity of about 5 to 40 Pa.s. The viscosity is measured at 20 °C at a shear rate of 10 s⁻¹, for example with a Bohlin Rheometer CS 100.

The preemulsion is preferably pumped at a pressure comprised between 10 and 100 bar. This means that it is possible to use according to the invention any existing pump working in this range.

It is possible according to the invention to operate either in a discontinuous or a continuous way. In the discontinuous manner, the preemulsion is prepared in a tank with all the ingredients mixed together with the help of a classical stirrer and then pumped through the pipe at the above mentioned pressure. In the continuous way of processing, the oil or fat on one side and all the other ingredients on the other side are brought together in a pre-emulsification unit and then pumped through the pipe.

Concerning the pumping of the preemulsion through the pipe, it is at least possible to operate according to two ways. The first is that the pumping is carried out through a pipe comprising one plate having one opening. The second way is that the pumping is carried out through a pipe comprising two plates, each plate comprising at least one opening. Preferably, the plate or plates have 1 to 10 openings. A solution with three or more plates is also possible, but not preferred.

The invention further relates to a device for carrying out the process described hereinbefore, consisting of a pipe for the flowing of the preemulsion, said pipe comprising at least one plate, each plate presenting at least one opening. Upstream of the device, there is either a classical stirrer or a prehomogenizer to prepare the preemulsion. Downstream of the device, no further emulsification is necessary. The emulsion is then filled either in jars or in tubes.

According to a first embodiment of the invention, the device comprises one plate with al least one opening. According to a second embodiment of the invention, the device comprises two plates, each plate comprising at least one opening. Preferably, for the first and the second embodiment, the plate or plates comprise 1 to 10 openings. In the case of the second embodiment, the distance between the two plates is such that the ratio of the diameter of the pipe to said distance between both plates is of at least 1, preferably of about 2 to 3.

In the device , for both embodiments, the pipe for allowing the preemulsion to flow through has such a diameter that the ratio diameter of the tube to the diameter of each opening is at least of about 10. This ratio is preferably comprised between 10 and 100.

The thickness of the plate is such that the preemulsion flows through the pipe for supporting the above mentioned pressure .

In the case of the second embodiment, the diameter of the openings in the first plate is either greater than the diameter of the openings in the second plate or smaller. It is also possible that they have the same size.

The device of the invention can be either disposed vertically or horizontally or inclined according to a certain angle. In the case of the preparation of an emulsion with a high oil content, it should be processed with a vertical device. Otherwise, all possibilities can to be taken into consideration.

The following description of the specification is made in relation with the drawings, wherein
Fig. 1 is a schematic view of the first embodiment of the device of the invention,
Fig. 2 is a schematic view of a second alternative of the first embodiment,
Fig. 3 is a schematic view of a third alternative of the first embodiment and
Fig. 4 is a schematic view of the second embodiment of the device of the invention.

The figures only show the device of the invention and not the upstream and downstream parts. Upstreams, there is normally means for preparing the preemulsion and downstream the filling line.

The tube (1) receives the preemulsion flowing according to the direction of arrow (4) through the opening (3) of the plate (2). The final emulsion flows in the direction according to arrow (5) and the ratio diameter of the tube to diameter of the opening is of 10. It is possible with this device to obtain an emulsion with particle size of the oil droplets of around 8 microns and a viscosity of 10 Pa.s.

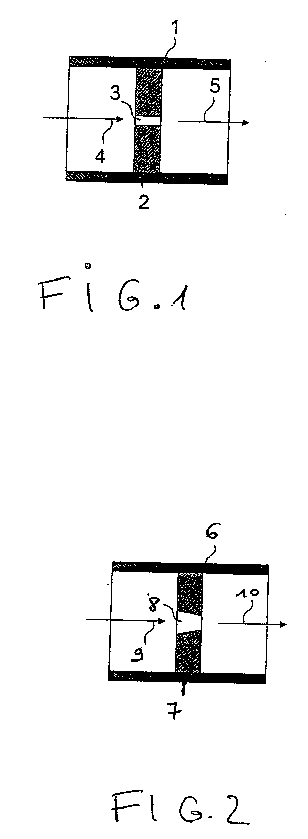

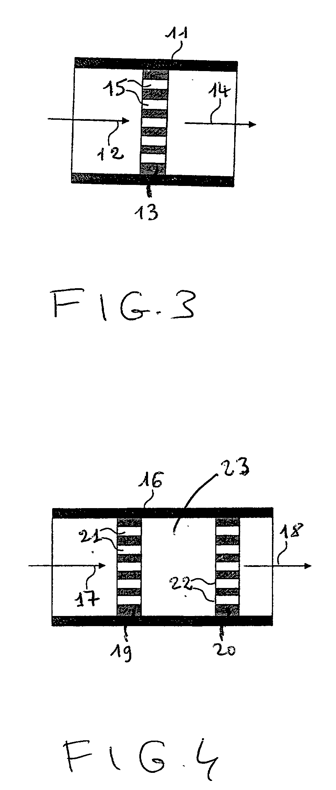

The device of figure 2 is similar to that of figure 1. There is a pipe (6) with a plate (7) , said plate presenting an opening (8). The preemulsion enters the pipe according to arrow (9) and leaves the pipe along arrow (10). The difference with the preceding figure is that the bore (8) has a frusto-conical shape.

In the device of figure 3, the pipe (11) has a plate (13) presenting five openings (15). Each opening has such a diameter that the ratio diameter of the tube to diameter of each opening is of 10. The preemulsion flows in the direction of arrow (12) for entering the device and leaves following the direction of arrow (14).

The figure 4 shows a device according to the second embodiment. The pipe (16) presents two plates (19) and (20), so that there is a formation of a chamber (23) between both plates. Both plates (19) and (20) have respectively openings (21) and (22). The ratio of the diameter of the pipe to the diameter of each bore is of 10. The preemulsion enters according direction of arrow (17) and leaves the device along direction (18). The distance between both plates is such that the ratio of the diameter of the pipe to said distance between both plates is of 1.

The following description is made in relation with an example.

### Example

An oil-in-water emulsion is prepared by mixing following ingredients :
70 % sunflower oil
6 % modified egg yolk
14 % water
4 % vinegar
6 % other ingredients, like sugar, salt, flavorings

This premix is put in a tank and stirred with a conventional device. This preemulsion is then pumped at a pressure of 25 bar through a pipe presenting one plate with 3 openings, having a ratio of tube diameter to each opening of 10. The flow rate of the preemulsion is around 200 kg/h.

The obtained emulsion has a viscosity of 20 Pa.s and an average size of the oil droplets of 4 microns.

The product has a good shelf life stability and remains very stable during at least 9 months at ambient temperature.

## Claims

1. A process for producing a food grade stable oil-in-water emulsion, which method comprises
- producing a preemulsion of the oil or melted fat, the water , the emulsifier and the other ingredients and
- pumping said preemulsion at a pressure of at least 5 bar through a pipe comprising at least one plate, said plate presenting at least one opening to obtain the emulsion.

2. A process according to claim 1, wherein the emulsion is produced with an oil content between 0.1 and 80 %.

3. A process according to claim 2, wherein the emulsion is produced with an oil content between 55 and 78 %.

4. A process according to any of claims 1 to 3, wherein the emulsion is produced with a final viscosity comprised between 1 to 50 Pa.s

5. A process according to claim 4, wherein the emulsion is produced with a final viscosity comprised between 5 and 40 Pa.s.

6. A process according to any of claims 1 to 5, wherein the preemulsion is pumped at a pressure comprised between 10 and 100 bar.

7. A process according to any of claims 1 to 6, wherein the preemulsion is prepared in a continuous or a discontinuous way.

8. A process according to any of claims 1 to 7, wherein the premulsion is pumped through a pipe comprising one plate comprising one opening.

9. A process according to any of claims 1 to 7, wherein the premulsion is pumped through a pipe comprising two plates, each plate comprising at least 1 opening.

10. A device for carrying out the process according to any of claims 1 to 9, consisting of a pipe for the flowing of the preemulsion, said pipe comprising at least one plate, each plate presenting at least one opening.

11. A device according to claim 11, wherein the pipe comprises one plate with between 1 and 10 openings.

12. A device according to claim 11, wherein the pipe comprises two plates with between 1 and 10 openings, the distance between both plates being such that the ratio of the diameter of the pipe to said distance is of at least 1.

13. A device according to any of claims 11 to 13, wherein the pipe has such a diameter that the ratio diameter of the tube to the diameter of each opening is at least of about 10.
